# EUROPÄISCHE PATENTSCHRIFT

(11) **EP 2 589 479 B1**
(45) Veröffentlichungstag und Bekanntmachung des Hinweises auf die Patenterteilung: **29.04.2020**
(21) Anmeldenummer: 12189203.8
(22) Anmeldetag: 19.10.2012
(51) Int. Cl.: F21V 7/22, F21S 41/19, F21S 41/147, F21S 41/37, F21S 45/47, B29C 45/14, B29L 11/00

(54) **VERFAHREN ZUR HERSTELLUNG VON REFLEKTOREN**
METHOD FOR MANUFACTURING REFLECTORS
PROCÉDÉ DE FABRICATION DE RÉFLECTEURS

(30) Priorität: 02.11.2011 AT 16052011
(43) Veröffentlichungstag der Anmeldung: 08.05.2013
(73) Patentinhaber: ZKW Group GmbH, 3250 Wieselburg (AT)
(72) Erfinder: Leonhartsberger, Rudolf, 3393 Zelking (AT)
(74) Vertreter: Patentanwaltskanzlei Matschnig & Forsthuber OG

(56) Entgegenhaltungen:
- EP-A1- 2 163 814
- EP-A1- 2 366 938
- DE-A1- 3 324 018
- DE-A1- 19 811 055
- DE-A1-102010 043 948
- DE-U- 1 841 908
- JP-A- 2006 114 275

## Beschreibung

Die Erfindung betrifft ein Verfahren zur Herstellung von Reflektoren, insbesondere von hoch präzisen und formstabilen Reflektoren für einen Fahrzeugscheinwerfer.

Weiters betrifft die Erfindung eine Lichteinheit mit zumindest einem solchen Reflektor.

Schließlich betrifft die Erfindung einen Kraftfahrzeugscheinwerfer mit einem oder mehreren Lichteinheiten.

Aufgrund der im Fahrzeugbau immer kleiner werdenden Reflektoren tritt das Problem auf, dass sich kleine Fehler in der Reflektoroberfläche, wie sie sich zum Beispiel durch Einfallstellen, Verzug, thermische Beanspruchung etc. ergeben, starke unerwünschte Auswirkungen auf das in einem Bereich vor dem Fahrzeug projizierte Lichtbild ausüben, insbesondere in Form von Unschärfen an der Hell-Dunkel-Grenze. Bei größeren Reflektoren sind solche Abweichungen in der Reflektorfläche in der Regel weniger unkritisch.

Es ist bekannt, Metallreflektoren für Kraftfahrzeuge aus Blech zu formen oder mittels Druckgussverfahren herzustellen. Zur Erzeugung einer glatten Oberfläche ist die Innenseite des Metallreflektors mit einem glänzenden Lack überzogen, zur Bildung der Reflexionsfläche wird die so gebildete Lackschicht abschließend bedampft.

Weitere Verfahren zur Herstellung von Reflektoren sind aus EP 2 163 814 A1 und aus DE 198 11 055 A1 bekannt.

Mit solchen Herstellungsverfahren kann allerdings insbesondere bei kleinen Reflektoren die gewünschte Genauigkeit der Reflektoroberfläche nicht realisiert werden.

Weiters ist es bekannt, Reflektoren im Spritzgussverfahren herzustellen. Solche Reflektoren lassen sich sehr genau fertigen, diese weisen allerdings den Nachteil auf, dass sie nicht die Formstabilität wie Metall aufweisen und auch thermischen Belastungen weniger gut standhalten, es entsprechend bei thermischer Belastung zu Verformungen kommen kann.

Es ist eine Aufgabe der Erfindung, ein Verfahren zur Herstellung eines Reflektors anzugeben, mit welchem auch kleine Reflektoren mit ausreichender Genauigkeit der Reflektoroberfläche hergestellt werden können. Kleine Reflektoren kommend zunehmend bei Lichteinheiten mit LED-Lichtquellen zum Einsatz.

Weiters ist es eine Aufgabe der Erfindung, einen Reflektor zu schaffen, der über eine ausreichend genaue Reflektoroberfläche und über Formstabilität verfügt.

Insbesondere ist es eine Aufgabe der Erfindung, einen Reflektor zu schaffen, bei dem eine exakte Positionierung der Lichtquelle(n) in Bezug auf die Reflektoroberfläche möglich ist.

Weiters ist es eine Aufgabe der Erfindung, einen Reflektor zu schaffen, dessen Reflektoroberfläche exakt in Bezug auf das Scheinwerfergehäuse positionierbar ist.

Diese Aufgaben werden mit einem eingangs genannten Verfahren mit den folgenden erfindungsgemäßen Schritte gelöst:
a) Herstellen eines metallischen, einstückigen Körpers, welcher Körper aus einem Basiskörper und zumindest einer Reflektorschale besteht,
b) Aufbringen eines geeigneten Materials, vorzugsweise eines Kunststoffmaterials, zur Bildung der zumindest einen Reflektorfläche im optisch wirksamen Bereich der zumindest einen Reflektorschale, wobei die zumindest eine Reflektorschale mit dem Material ummantelt bzw. umformt wird,
wobei der Basiskörper als Kühlkörper ausgebildet ist, und wobei der Kühlkörper zur Aufnahme einer LED-Lichtquelle eingerichtet ist.

Diese Aufgaben werden weiters gemäß Anspruch 9 mit einem Reflektor gelöst, welcher erfindungsgemäß besteht aus einem metallischen, einstückigen Körper, welcher Körper aus einem Basiskörper und zumindest einer Reflektorschale besteht, wobei in einem optisch wirksamen Bereich der zumindest einen Reflektorschale ein geeignetes Materials, vorzugsweise eine Kunststoffmaterials, zur Bildung der zumindest einen Reflektorfläche aufgebracht ist, und wobei das Material zumindest im optisch relevanten Bereich mit einem reflektierenden Material, beispielsweise mit Aluminium oder Silber, zur Bildung einer reflektierenden Schicht beschichtet, vorzugsweise bedampft ist.

Der Metallkörper, der vorzugsweise ein Druckgusskörper, z.B. ein Aluminiumdruckgusskörper, oder ein Tiefziehkörper ist, wird derart gestaltet, dass er einstückig mit der Metall-Reflektorfläche, welche einen Teil (Innenteil) der Reflektorschale darstellt, ausgebildet ist.

Der Basiskörper ist als Kühlkörper ausgebildet.

Der Druckgusskörper wird in ein Werkzeug, vorzugsweise eine Spritzgussmaschine eingelegt, um die eigentliche Reflektorfläche aufbringen zu können. Die Referenzierung des Körpers in dem Werkzeug (in der Spritzgussmaschine) erfolgt über definierte Positionen.

Vorzugsweise weist dazu der metallische Körper ein, zwei oder mehrere, an seinem Basiskörper ausgebildete Referenzierbereiche auf, mittels welchem bzw. mittels welcher er in einem Werkzeug (Spritzgussmaschine) zur Aufbringung des Materials, vorzugsweise des Kunststoffmaterials, positioniert wird.

Die Reflektorschale wird zumindest im Bereich des optisch wirksamen Bereiches, d.h. insbesondere an der Innenseite mit dem Material, das vorzugsweise ein Kunststoffmaterial, beispielsweise ein Thermoplast ist, versehen.

Vorzugsweise wird dabei in Schritt b) im Wesentlichen auf der gesamten zumindest einen Reflektorschale das Material aufgebracht.

Wie oben schon erwähnt, erfolgt das Aufbringen des Materials, welches vorzugsweise in Form eines Kunststoffes vorliegt, vorzugsweise in einer Spritzgussmaschine, in welcher das Material auf die zumindest eine Reflektorschale aufgespritzt wird.

Durch die stabile Grundform des metallischen Körpers, insbesondere des Druckgusskörpers oder Tiefziehkörpers, ist der freie Schwund des Körpers, welcher zu großen Toleranzen führen kann, unterbunden. Weiters wird ein damit verbundener Verzug des Reflektors ebenfalls verhindert.

Weiters ist es von Vorteil, wenn in Schritt b) Dome und andere Befestigungselemente aus dem Material während des Aufbringens des Materials mitgeformt werden.

Solche Dome etc. können beispielsweise als Referenzierdome für eine Lichtquelle dienen, um dieses in der exakten Position in Bezug auf die Reflektorfläche zu halten. Das Ausbilden der Dome etc. aus dem (Kunststoff-)Material ist von Vorteil, da sich diese nicht mit ausreichender Genauigkeit im Druckguss oder beim Tiefziehen herstellen lassen. Befestigungsanbindungen, wie zum Beispiel Schraubdome, die auf der Rückseite der Reflektorfläche bzw. der Reflektorschale aus dem Kunststoffmaterial ausgeformt werden, können so auf der Reflektoroberfläche keine Einfallstellen mehr erzeugen.

Außerdem ist es zweckmäßig, wenn in Schritt a) Aussparungen etc. in dem metallischen Körper ausgebildet werden.

Mit der Erfindung können Toleranzschwankungen in der Fertigung aufgrund unterschiedlicher Materialchargen auf ein Minimum reduziert werden, Werkzeugungenauigkeiten oder Polierfehler in der Reflektorfläche stellen keine Probleme mehr dar.

Nach dem Aufbringen des Kunststoffes kann der Körper auf herkömmliche Art und Weise mit der reflektierenden Schicht bedampft werden, eine Vorbehandlung ist nicht notwendig.

Vorzugsweise handelt es sich bei dem Material zum Aufbringen um ein Thermoplast.

Die Reflektorfläche bzw. einzelne Reflektorsegmente können bei Verwendung von Thermoplast mit hoher Genauigkeit erzeugt werden.

Wird der Druckgussteil lediglich beschichtet, kann diese Genauigkeit nicht erreicht werden.

Von besonderem Vorteil ist es, wenn die Reflektorschale an ihrer Vorder- und ihrer Rückseite gleichzeitig und/oder gleichmäßig umspritzt wird.

Günstig ist es, wenn beim Spritzgussprozess darauf geachtet wird, dass die Reflektorfläche hinten und vorne gleichzeitig "gefüllt" wird (d.h. der Zwischenraum zwischen Reflektorschale und Werkzeug), was z.B. durch Fließbremsen erreicht werden kann. Auf diese Weise kann eine Verformung der Reflektorfläche bzw. der Reflektorschale (aus Metall) in Folge des hohen Einspritzdruckes verhindert werden

Der Anguss kann von hinten mittels Tunnel erfolgen, da die (Aluminium-)Druckgussschale als Prallwand fungieren kann. Beim entnehmen aus der Spritzgussmaschine kann das Handling den Körper am nicht umspritzen Bereich erfassen. Dadurch kann das Abbrechen eines Angusses bei einem Filmanguss eingespart werden.

Diverse Aussparungen werden an dem Druckgusskörper angebracht, um im nachfolgenden Prozess Positionierdome anbringen und die Lichtquelle positionieren/anbringen zu können.

Anschließend an Schritt b) wird schließlich in Schritt c) das Material zumindest im optisch relevanten Bereich mit einem reflektierenden Material, beispielsweise mit Aluminium oder Silber, zur Bildung einer reflektierenden Schicht beschichtet, vorzugsweise bedampft.

Im Folgenden ist die Erfindung an Hand der Zeichnung näher dargestellt. In dieser zeigt
Fig. 1 ein erfindungsgemäßes Lichtmodul,
Fig. 2 den Reflektor aus Figur 1 mit abgenommener Lichtquellenabdeckung und mit abgenommener Lichtquelle,
Fig. 3 die Darstellung aus Figur 2 mit teilweise "abgenommener" Kunststoffumformung,
Fig. 4 eine Lichtquellenabdeckung mit integriertem Zusatzreflektor,
Fig. 5 die Darstellung aus Figur 2 mit referenzierter Lichtquelle,
Fig. 6 einen Vertikalschnitt entlang der strichpunktierten Linie durch den Körper wie in Figur 3 abgebildet, und
Fig. 7 eine Detailansicht des in Figur 6 eingekreist gekennzeichneten Referenzbereiches.

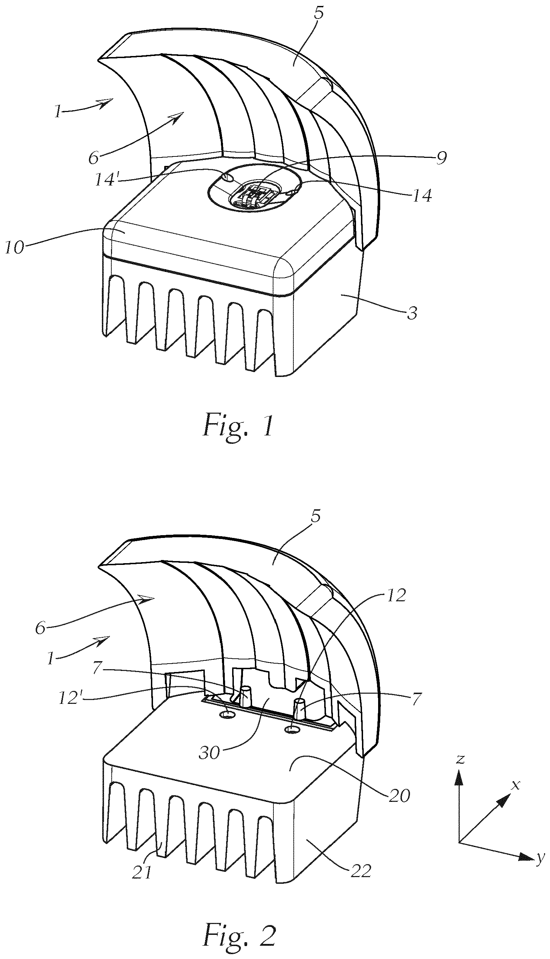

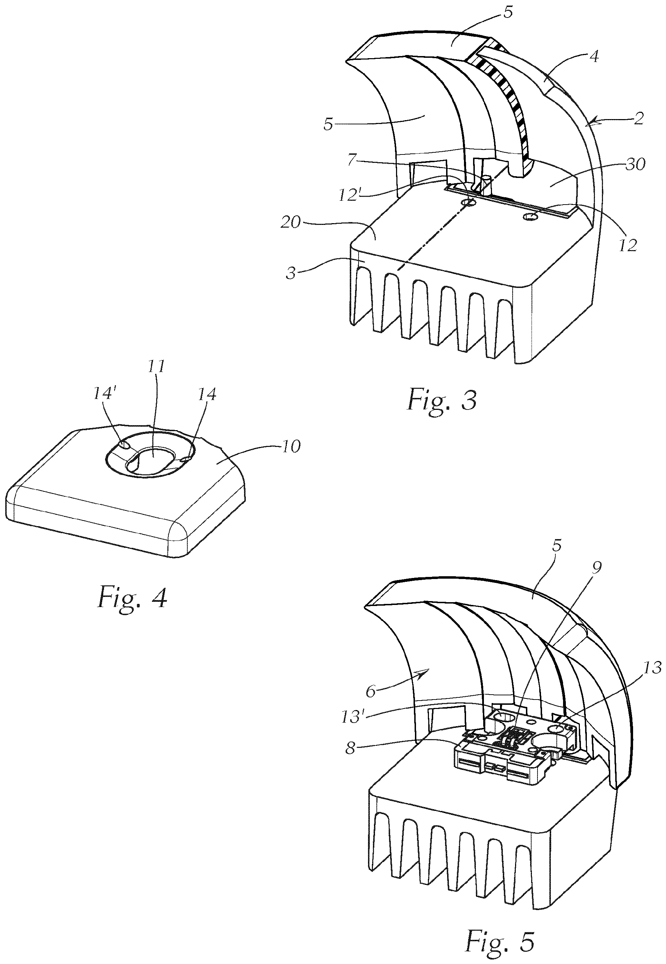

Figur 1 zeigt einen erfindungsgemäßen Lichteinheit bzw. Lichtmodul 1. Diese besteht aus einem metallischen, vorzugsweise einstückigen Körpers 2 (siehe Figur 3), welcher Körper 2 aus einem Basiskörper - etwa in Form eines Kühlkörpers 3 - und zumindest einer, in dem vorliegenden Beispiel genau einer Reflektorschale 4 besteht. Schale 4 und Kühlkörper 3 sind also einstückig ausgebildet.

Denkbar ist es auch, dass der Basiskörper (Kühlkörper) mit der Reflektorschale verschraubt ist und dann dieser Körper umspritzt wird und so die zusätzlichen Ungenauigkeiten, die durch die Verschraubung entstehen könnten, auch ausgeglichen werden. Vorzuziehen ist aber in der Regel die einstückige Ausgestaltung.

Der Körper 2 weist eine Aussparung 30 auf, um eine Lichtquelle positionieren zu können. Die erfindungsgemäßen Lichteinheiten bzw. Module sind relativ klein. Werden Dome 7 (siehe weiter unten) anformt, kontaktiert eine anschließend angebrachte Lichtquelle den Reflektor.

Damit genügend Handlungsspielraum zum Montieren vorhanden ist, wird der hintere Bereich frei gestellt, also eine Aussparung 30 angebracht. Dieser Handlungsspielraum ist auch notwendig, um die sehr heikle Reflektoroberfläche bei der Montage nicht zu beschädigen.

Solch eine beispielhafte Freistellung 30 ist im dargestellten Fall, in einem nicht genutzten Reflektorbereich, der ohnehin nicht viel zur Lichtverteilung beitragen würde, angeordnet.

Natürlich könnten auch Referenzdome für den Reflektorteil 10 angeformt sein, damit auch dieser exakt zu den LEDs positioniert ist. Im dargestellten Fall ist das aber nicht zwingend nötig, da der Reflektor 10 nur das schon sehr lichtschwache seitlich emittierte Licht reflektiert.

Auf die Reflektorschale 4 ist ein Material 5, vorzugsweise ein Kunststoffmaterial, zur Bildung der Reflektorfläche 6 aufgebracht, über welche Licht einer Lichtquelle in den Außenraum abgestrahlt wird. Vorzugsweise handelt es sich bei dem Material 5 zum Aufbringen um ein Thermoplast, zum Beispiel Polyimid oder Polyetherimid.

Die Reflektorfläche bzw. einzelne Reflektorsegmente können bei Verwendung von Thermoplast mit hoher Genauigkeit erzeugt werden.

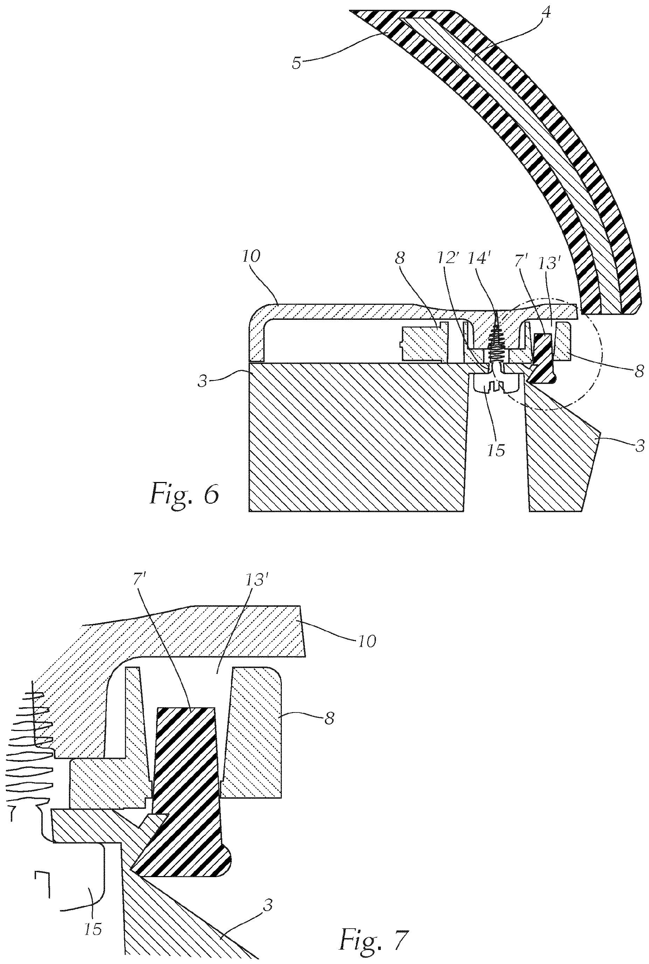

Auf dem Kühlkörper 3 ist eine LED-Lichtquelle 8 mit (in diesem Fall) einer LED 9 angebracht. (Figur 5). Die Lichtquelle 8 ist mit einer "Abdeckung" 10 abgedeckt, welche eine Lichtaustrittsöffnung 11 aufweist. Weiters sind in der Abdeckung 10 Gewindebohrungen 14, 14' vorgesehen, über welche die "Abdeckung" 10 in entsprechenden Bohrungen 12, 12' in dem Kühlkörper mit Schrauben 15 (Figur 6, 7) verschraubt wird.

Um für die Lichtquelle 8 eine möglichst genaue Referenz zu schaffen, ist es günstig, wenn die Referenzdome 7 (Figur 2, Figur 3) für die Lichtquelle mit der Reflektorfläche aus dem Kunststoffmaterial 5 mitgeformt werden. Somit spielen die Toleranzen des Druckgusskörpers 2 für die Positionstoleranz der Lichtquelle in einer x-und y-Richtung keine Rolle mehr. Um auch in der z-Richtung die Toleranz gering zu halten, ist es von Vorteil, wenn beim Umspritzen der Reflektorschale 4 die Auflagefläche 20 für die Lichtquelle auf dem Basiskörper gleichzeitig die Referenz für die Spritzgussmaschine darstellt; der Bereich 20 bzw. überhaupt der Basiskörper 3 ist daher nicht mit Kunststoff versehen.

Die Referenzfläche 20 des Kühlkörpers gibt die exakte Position der LED-Lichtquelle in z-Richtung vor. Die Reflektorfläche 6 sollte also exakt zu dieser Referenzfläche 20 positioniert sein. Außerdem wird über die Referenzfläche 20 Wärme der LEDs abgeleitet, sodass diese nicht mit Kunststoff beschichtet bzw. umspritzt sein sollte.

An diesen Domen 7 kann die Lichtquelle 8 mit entsprechenden Öffnungen 13, 13' positioniert werden.

Der Druckgusskörper wird in ein Werkzeug, vorzugsweise eine Spritzgussmaschine eingelegt, um die eigentliche Reflektorfläche 6 aufbringen zu können. Die Referenzierung des Körpers in dem Werkzeug (in der Spritzgussmaschine) erfolgt über definierte Positionen. Dazu weist der metallische Körper 2 an seinem Basiskörper 3 ausgebildete Referenzierbereiche 20, 21, 22 auf, mittels welcher er in einem Werkzeug (Spritzgussmaschine) zur Aufbringung des Materials 5 positioniert wird.

Bei der gezeigten Variante sind drei Referenzierbereiche vorgesehen, in der Regel reicht zumindest ein solcher Bereich.

Nach dem Aufbringen des Kunststoffes kann der Körper, wie er in Figur 2 dargestellt ist, auf herkömmliche Art und Weise mit der reflektierenden Schicht beschichtet, vorzugsweise bedampft werden, eine Vorbehandlung ist - insbesondere bei Verwendung von Polyimid oder Polyetherimid nicht notwendig.

Die Beschichtung erfolgt dabei vorzugsweise nur im optisch relevanten Bereich, beispielsweise mit Aluminium oder Silber, zur Bildung der reflektierenden Schicht.

Die Befestigung der Lichtquelle 8 kann beispielsweise wie folgt erfolgen: Auflegen der Lichtquelle 8 ohne Kleber auf die Fläche 20, so dass die Toleranz der Lichtquelle in z-Richtung um die Toleranz des Klebers verringert werden kann. Dies ist ein weiterer Vorteil der Erfindung.

Falls die Reflektorfläche eine größere Toleranz in z-Richtung zulässt, kann die Lichtquelle an den Basiskörper auch angeklebt werden. Dies hängt im Wesentlichen von der Größe des Systems und/oder der Art der zu erreichenden Lichtfigur ab. Ein Nebelscheinwerfer oder ein Fernlicht ist wesentlich unempfindlicher als eine abgeblendete Lichtfigur, wie z. B. Abblendlicht.

Bei der gezeigten Variante, siehe dazu im Detail auch die Figuren 6 und 7, wird eine sogenannte Shutterblende (Abdeckung der Lichtquelle) 10 gleichzeitig als Befestigungshilfe für die Lichtquelle 8 verwendet, indem zwei Schrauben, vorzugsweise Kunststoffschrauben 15 von der Unterseite des Basiskörpers 3 her in die Shutterblende 10 geschraubt werden und die Lichtquelle auf den Basiskörper (Kühlkörper) pressen, wie dies oben schon beschrieben wurde.

Bei der Shutterblende 10 handelt es sich nicht um eine Strahlenblende im herkömmlichen Sinn, sondern im Wesentlichen um ein Designelement. Die dargestellten Bauteile wie die LED-Lichtquelle sind von außerhalb des Scheinwerfers sichtbar, mit dem Element 10 kann diese optisch verdeckt werden.

Außerdem kann die Blende 10 auch als Zusatz-Reflektor Verwendung finden, um das System optischer wirksamer zu machen. Das insbesondere unter einem größeren Winkel aus der Lichtquelle austretende Licht wird reflektiert (an der ovalen Fläche des Elementes 10), sodass auch dieses genutzt werden kann.

Natürlich könnten auch Referenzdome für den Bauteil 10 aus dem Material 5 ausgeformt sein, damit auch dieser exakt zu den LEDs positioniert ist. Im dargestellten Fall ist das aber nicht zwingend nötig, da der Bauteil 10 nur das schon sehr lichtschwache seitlich emittierte Licht reflektiert.

Ein weiterer relevanter, nicht in den Figuren dargestellter Punkt ist folgender: an der Lichteinheit können auch Halteelemente, z.B. zum Befestigen der Einheit an einem Tragrahmen, angebracht/angeformt werden, diese sitzen beispielsweise an der Außenseite der Reflektorschale.

Bei reinen Kunststoffreflektoren können diese Haltemittel einen zusätzlichen Verzug der Reflektoroberfläche bewirken, der das reflektierte Licht ungewünscht beeinflussen kann.

Im vorliegenden Fall ist ein solcher Verzug durch das formstabile metallische Grundgerüst zuverlässig verhindert.

Mit einem erfindungsgemäßen Scheinwerfer bzw. Lichtmodul können die relevanten ECE und SAE Normen erfüllt werden.

## Patentansprüche

1. Verfahren zur Herstellung von Reflektoren (1), insbesondere von hoch-präzisen und formstabilen Reflektoren für einen Fahrzeugscheinwerfer, **gekennzeichnet durch** die folgenden Schritte:
a) Herstellen eines metallischen, vorzugsweise einstückigen Körpers (2), welcher Körper (2) aus einem Basiskörper (3) und zumindest einer Reflektorschale (4) besteht,
b) Aufbringen eines geeigneten Materials (5), vorzugsweise eines Kunststoffmaterials, zur Bildung der zumindest einen Reflektorfläche (6) im optisch wirksamen Bereich der zumindest einen Reflektorschale (4), wobei die zumindest eine Reflektorschale (4) mit dem Material (5) ummantelt bzw. umformt wird,
**dadurch gekennzeichnet, dass** der Basiskörper (3) als Kühlkörper ausgebildet ist, und dass der Kühlkörper zur Aufnahme einer LED-Lichtquelle (8) eingerichtet ist.

2. Verfahren nach Anspruch 1, **dadurch gekennzeichnet, dass** das Material (5) auf die zumindest eine Reflektorschale (4) aufgespritzt wird, wobei vorzugsweise das Material (5) ein Thermoplast ist.

3. Verfahren nach Anspruch 1 oder 2, **dadurch gekennzeichnet, dass** in Schritt b) Dome (7) und andere Befestigungselemente aus dem Material (5) während des Aufbringens des Materials (5) mitgeformt werden.

4. Verfahren nach einem der Ansprüche 1-3, **dadurch gekennzeichnet, dass** in Schritt a) Aussparungen etc. in dem metallischen Körper (1) ausgebildet werden.

5. Verfahren nach einem der Ansprüche 1 bis 4, **dadurch gekennzeichnet, dass** die Reflektorschale an ihrer Vorder- und ihrer Rückseite gleichzeitig und/oder gleichmäßig umspritzt wird.

6. Verfahren nach einem der Ansprüche 1-5, **dadurch gekennzeichnet, dass** der metallische Körper (1) ein Druckgusskörper, z.B. ein Aluminiumdruckgusskörper oder ein Magnesiumdruckgusskörper, oder ein Tiefziehkörper ist.

7. Verfahren nach einem der Ansprüche 1 bis 6, **dadurch gekennzeichnet, dass** anschließend an Schritt b) in Schritt c) das Material (5) zumindest im optisch relevanten Bereich mit einem reflektierenden Material, beispielsweise mit Aluminium oder Silber, zur Bildung einer reflektierenden Schicht beschichtet, vorzugsweise bedampft wird.

8. Verfahren nach einem der Ansprüche 1 bis 7, **dadurch gekennzeichnet, dass** der metallische Körper ein, zwei oder mehrere, an seinem Basiskörper (3) ausgebildete Referenzierbereiche (20, 21, 22) aufweist, mittels welchem bzw. mittels welcher er in einem Werkzeug zur Aufbringung des Materials (5), vorzugsweise des Kunststoffmaterials, positioniert wird.

9. Lichteinheit, umfassend einen metallischen, vorzugsweise einstückigen Körper (2), welcher Körper (2) aus einem Basiskörper (3) und zumindest einer Reflektorschale (4) besteht, wobei in einem optisch wirksamen Bereich der zumindest einen Reflektorschale (4) ein geeignetes Materials (5), vorzugsweise ein Kunststoffmaterial, zur Bildung der zumindest einen Reflektorfläche (6) aufgebracht ist, wobei das Material (5) zumindest im optisch relevanten Bereich mit einem reflektierenden Material, beispielsweise mit Aluminium oder Silber, zur Bildung einer reflektierenden Schicht beschichtet, vorzugsweise bedampft ist, wobei die zumindest eine Reflektorschale (4) mit dem Material (5) ummantelt bzw. umformt wird, wobei vorzugsweise das Material (5) im Wesentlichen auf der gesamten Reflektorschale (4) aufgebracht ist, **dadurch gekennzeichnet, dass** der Basiskörper (3) als Kühlkörper ausgebildet, und dass der Kühlkörper zur Aufnahme einer LED-Lichtquelle (8) eingerichtet ist.

10. Lichteinheit nach Anspruch 9, **dadurch gekennzeichnet, dass** die zumindest eine Reflektorschale (4) mit dem Material (5) ummantelt bzw. umformt ist.

11. Lichteinheit nach Anspruch 9 oder 10, **dadurch gekennzeichnet, dass** das Material (5) auf die zumindest eine Reflektorschale (4) aufgespritzt ist, wobei vorzugsweise das Material (5) ein Thermoplast ist.

12. Lichteinheit nach einem der Ansprüche 9-11, **dadurch gekennzeichnet, dass** Dome (7) und andere Befestigungselemente aus dem Material (5) mitgeformt sind.

13. Lichteinheit nach einem der Ansprüche 9-12, **dadurch gekennzeichnet, dass** der metallische Körper (1) ein Druckgusskörper, z.B. ein Aluminiumdruckgusskörper oder ein Magnesiumdruckgusskörper ist.

14. Lichteinheit nach einem der Ansprüche 9 bis 13 mit zumindest einer Lichtquelle, z.B. zumindest einer LED-Lichtquelle, welche zumindest eine Leuchtdiode umfasst, deren Licht über den zumindest einen Reflektor der Lichteinheit - in einem in ein Fahrzeug eingebauten Zustand - in den Fahrzeugaußenraum abgestrahlt wird.

15. Scheinwerfer mit einem oder mehreren Lichteinheiten nach einem der Ansprüche 9 bis 14.

## Claims

1. A method for producing reflectors (1), particularly highly precise and dimensionally stable reflectors for a vehicle headlamp, **characterized by** the following steps:
a) producing a metallic, preferably one-piece body (2), which body (2) consists of a base body (3) and at least one parabolic reflector (4),
b) applying a suitable material (5), preferably a plastic material, for forming the at least one reflector surface (6) in the optically effective region of the at least one parabolic reflector (4), wherein the at least one parabolic reflector (4) is coated or reshaped with the material (5),
**characterized in that**
the base body (3) is constructed as a heat sink and **in that** the heat sink is set up for accommodating an LED light source (8).

2. The method according to Claim 1, **characterized in that** the material (5) is sprayed onto the at least one parabolic reflector (4), wherein the material (5) is preferably a thermoplastic.

3. The method according to Claim 1 or 2, **characterized in that** in step b), domes (7) and other fastening elements are also formed from the material (5) during the application of the material (5).

4. The method according to one of Claims 1 to 3, **characterized in that** in step a), recesses, etc. are formed in the metallic body (1).

5. The method according to one of Claims 1 to 4, **characterized in that** the parabolic reflector is simultaneously and/or uniformly overmoulded on its front and its rear side.

6. The method according to one of Claims 1 to 5, **characterized in that** the metallic body (1) is a die-cast body, e.g. an aluminium die-cast body or a magnesium die-cast body, or a deep-drawn body.

7. The method according to one of Claims 1 to 6, **characterized in that** subsequently to step b), in step c), the material (5) is coated, preferably vapour-coated, at least in the optically relevant region, with a reflective material, for example with aluminium or silver, to form a reflective layer.

8. The method according to one of Claims 1 to 7, **characterized in that** the metallic body has one, two or more reference regions (20, 21, 22) formed on its base body (3), by means of which it is positioned in a mould for applying the material (5), preferably the plastic material.

9. A light unit, comprising a metallic, preferably one-piece body (2), which body (2) consists of a base body (3) and at least one parabolic reflector (4), wherein a suitable material (5), preferably a plastic material, is applied in an optically effective region of the at least one parabolic reflector (4) to form the at least one reflector surface (6), wherein the material (5) is coated, preferably vapour-coated, at least in the optically relevant region, with a reflective material, for example with aluminium or silver, to form a reflective layer, wherein the at least one parabolic reflector (4) is coated or reshaped with the material (5), wherein the material (5) is preferably applied essentially on the entire parabolic reflector (4), **characterized in that** the base body (3) is constructed as a heat sink, and **in that** the heat sink is set up for accommodating an LED light source (8).

10. The light unit according to Claim 9, **characterized in that** the at least one parabolic reflector (4) is coated or reshaped with the material (5).

11. The light unit according to Claim 9 or 10, **characterized in that** the material (5) is sprayed onto the at least one parabolic reflector (4), wherein the material (5) is preferably a thermoplastic.

12. The light unit according to one of Claims 9 to 11, **characterized in that** domes (7) and other fastening elements are also formed from the material (5).

13. The light unit according to one of Claims 9 to 12, **characterized in that** the metallic body (1) is a die-cast body, e.g. an aluminium die-cast body or a magnesium die-cast body.

14. The light unit according to one of Claims 9 to 13, having at least one light source, e.g. at least one LED light source, which comprises at least one light-emitting diode, the light of which is radiated via the at least one reflector of the light unit - in an installed state in a vehicle - into the space outside the vehicle.

15. A headlamp having one or more light units according to one of Claims 9 to 14.

## Revendications

1. Procédé, destiné à fabriquer des réflecteurs (1), notamment des réflecteurs haute précision et indéformables pour un projecteur de véhicule, **caractérisé par** les étapes suivantes, consistant à :
a) fabriquer un corps (2) métallique, de préférence en monobloc, lequel corps (2) est constitué d'un corps de base (3) et d'au moins une coque de réflecteur (4),
b) appliquer une matière (5) adaptée, de préférence une matière plastique, pour créer l'au moins une surface de réflecteur (6) dans la zone optiquement active de l'au moins une coque de réflecteur (4), l'au moins une coque de réflecteur (4) étant enveloppée ou surmoulée avec la matière (5),
**caractérisé en ce que**
le corps de base (3) est conçu sous la forme d'un dissipateur thermique et **en ce que** le dissipateur thermique est aménagé pour recevoir une source lumineuse à LED (8).

2. Procédé selon la revendication 1, **caractérisé en ce qu'**on injecte la matière (5) sur l'au moins une coque de réflecteur (4), la matière (5) étant de préférence une matière thermoplastique.

3. Procédé selon la revendication 1 ou 2, **caractérisé en ce que** dans l'étape b), on moule conjointement des dômes (7) et d'autres éléments de fixation à partir de la matière (5) pendant l'application de la matière (5).

4. Procédé selon l'une quelconque des revendications 1 à 3, **caractérisé en ce que** dans l'étape a), on crée des échancrures etc. dans le corps (1) métallique.

5. Procédé selon l'une quelconque des revendications 1 à 4, **caractérisé en ce qu'**on enrobe par injection simultanément et/ou régulièrement la coque de réflecteur sur sa face avant et sur sa face arrière.

6. Procédé selon l'une quelconque des revendications 1 à 5, **caractérisé en ce que** le corps (1) métallique est un corps moulé sous pression, par exemple un corps en aluminium moulé sous pression ou un corps en magnésium moulé sous pression, ou un corps embouti.

7. Procédé selon l'une quelconque des revendications 1 à 6, **caractérisé en ce qu'**à la suite de l'étape b), dans l'étape c) on revêt la matière (5), de préférence on la vaporise, au moins dans la zone déterminante du point de vue optique avec une matière réfléchissante, par exemple avec de l'aluminium ou de l'argent, pour créer une couche réfléchissante.

8. Procédé selon l'une quelconque des revendications 1 à 7, **caractérisé en ce que** le corps métallique comporte une, deux ou plusieurs zones de référence (20, 21, 22) créées sur son corps de base (3), au moyen de laquelle ou au moyen desquelles on le positionne dans un outil pour l'application de la matière (5), de préférence de la matière plastique.

9. Module lumineux, comprenant un corps (2) métallique, de préférence en monobloc, lequel corps (2) est constitué d'un corps de base (3) et d'au moins une coque de réflecteur (4), dans une zone optiquement active de l'au moins une coque de réflecteur (4) étant appliquée une matière (5) adaptée, de préférence une matière plastique, pour créer l'au moins une surface de réflecteur (6), la matière (5) étant revêtue, de préférence vaporisée au moins dans la zone déterminante du point de vue optique d'une matière réfléchissante, par exemple d'aluminium ou d'argent, pour créer une couche réfléchissante, l'au moins une coque de réflecteur (4) étant enveloppée, de préférence surmoulée avec de la matière (5), de préférence la matière (5) étant appliquée sur sensiblement l'ensemble de la coque de réflecteur (4), **caractérisé en ce que** le corps de base (3) est conçu sous la forme d'un dissipateur thermique et **en ce que** le dissipateur thermique est aménagé pour recevoir une source lumineuse à LED (8).

10. Module lumineux selon la revendication 9, **caractérisé en ce que** l'au moins une coque de réflecteur (4) est enveloppée ou surmoulée avec la matière (5).

11. Module lumineux selon la revendication 9 ou 10, **caractérisé en ce que** la matière (5) est injectée sur l'au moins une coque de réflecteur (4), la matière (5) étant de préférence une matière thermoplastique.

12. Module lumineux selon l'une quelconque des revendications 9 à 11, **caractérisé en ce que** des dômes (7) et d'autres moyens de fixation sont moulés conjointement à partir de la matière (5).

13. Module lumineux selon l'une quelconque des revendications 9 à 12, **caractérisé en ce que** le corps (1) métallique est un est un corps moulé sous pression, par exemple un corps en aluminium moulé sous pression ou un corps en magnésium moulé sous pression.

14. Module lumineux selon l'une quelconque des revendications 9 à 13, pourvu d'au moins une source lumineuse, par exemple d'au moins une source lumineuse à LED, laquelle comprend au moins une diode électroluminescente dont la lumière est émise par l'intermédiaire de l'au moins un réflecteur du module lumineux (en position montée dans le véhicule) dans l'espace extérieur au véhicule.

15. Projecteur, pourvu d'un ou de plusieurs modules lumineux selon l'une quelconque des revendications 9 à 14.
